# EUROPÄISCHE PATENTSCHRIFT

(11) **EP 3 180 539 B1**
(45) Veröffentlichungstag und Bekanntmachung des Hinweises auf die Patenterteilung: **22.09.2021**
(21) Anmeldenummer: 15736808.5
(22) Anmeldetag: 06.07.2015
(51) Int. Cl.: F16D 65/12, F16D 65/78, B60T 5/00, B61H 11/00, H02K 9/19, B60H 1/00

(54) **SCHIENENFAHRZEUG MIT EINER KLIMAANLAGE UND EINER REIBUNGSBREMSE**
RAIL VEHICLE HAVING AN AIR-CONDITIONING SYSTEM AND HAVING A FRICTION BRAKE
VÉHICULE FERROVIAIRE ÉQUIPÉ D'UN CLIMATISEUR ET D'UN FREIN À FRICTION

(30) Priorität: 13.08.2014 AT 505692014
(43) Veröffentlichungstag der Anmeldung: 21.06.2017
(73) Patentinhaber: Siemens Mobility Austria GmbH, 1210 Wien (AT)
(72) Erfinder: STOJANOVIC, Vladimir, A-1100 Wien (AT)
(74) Vertreter: Deffner, Rolf
(86) Internationale Anmeldenummer: PCT/EP2015/065295
(87) Internationale Veröffentlichungsnummer: WO 2016/023682

(56) Entgegenhaltungen:
- EP-A2- 1 203 896
- EP-A2- 2 031 739
- DE-A1- 2 421 351
- DE-A1-102009 048 627

## Beschreibung

### Technisches Gebiet

Die Erfindung betrifft allgemein das technische Gebiet von Schienenfahrzeugen, insbesondere Schienenfahrzeuge die mit einer Klimaanlage und mit einer Reibungsbremse ausgestattet sind.

### Stand der Technik

Bei Schienenfahrzeugen wird der Fahrgastraum bzw. der Führerstand mit einer Klimaanlage ausgestattet, die in einem Kühl- bzw. Heizbetrieb sicherstellt, dass die jeweilige Innentemperatur innerhalb vorgegebener Grenzen gehalten werden kann. Bei einem Zug ist eine Klimaanlage mit etwa 20 % des Energieverbrauchs neben dem Antrieb der größte Energieverbraucher. Nicht nur bei Schienenfahrzeugen, sondern in der gesamten Fahrzeugtechnik gewinnen zunehmend umweltpolitische und ökologische Aspekte an Bedeutung und gehen einher mit steigenden Komfortbedürfnissen des Fahrgastes.

Üblicherweise sind Schienenfahrzeuge, beispielsweise U-Bahnen oftmals mit konventionellen Reibungsbremsen, wie beispielsweise einer Scheibenbremse oder einer Trommelbremse ausgestattet. Im Gegensatz zur elektrischen Nutzbremsung geht bei einer Reibungsbremse die kinetische Energie für die Fortbewegung des Fahrzeugs verloren. Die bei einem Bremsvorgang erzeugt Bremswärme wird ungenutzt an die Umgebung abgegeben. Sie ist u. A. abhängig von Bremskraft, Beladung und Augenblicksgeschwindigkeit des Zugs. Es können bei einer Reibungsbremse Grenztemperaturen in einem Bereich zwischen 300 °C und 500 °C auftreten. Diese Temperaturen werden noch von organischen Bremsbelägen beherrscht, darüber hinaus werden Sinterbremsbeläge eingesetzt.

Die bei einem Bremsvorgang an die Umgebung abgegebene Wärmemenge ist aus verschiedenen Gründen unerwünscht. Bei U-Bahnen, die über längere Strecken unterirdisch fahren, kann seitens der U-Bahn-Infrastruktur die maximal zulässige Abwärme eines Zugs durch einen Grenzwert begrenzt sein.

Bei Schienenfahrzeugen ist es auch üblich, dass die für die Klimatisierung des Fahrgastraums erforderliche Energie durch Umwandlung elektrischer Energie gewonnen wird.

Sowohl die Nichtnutzung der Bremswärme als auch die Verwendung elektrischer Energie zum Zwecke der Heizung ist ineffizient und außerdem ökologisch ungünstig.

Man bemüht sich daher zunehmend, bordseitige Prozesse der Energiewandlung möglichst effizient und ökologisch vorteilhaft zu gestalten.

Aus der EP 2 031 739 A2 ist beispielsweise ein Schienenfahrzeug mit Klima-Wärmetauscher zur Wärmerückgewinnung aus dem Kühlkreislauf für Klimatisierungszwecke bekannt. Dokument DE 10 2009 048627 offenbart eine von einem Fluid-Kreislauf mit Wärmetauscher gekühlte Reibbremse. EP 1 203 896 A2 offenbart ein Verfahren zum Kühlen von Antriebskomponenten eines Fahrzeugs.

### Darstellung der Erfindung

Es ist eine Aufgabe der vorliegenden Erfindung ein Schienenfahrzeug, welches mit einer Klimaanlage und einer Reibungsbremse ausgestattet ist so anzugeben, dass die bei einem Bremsvorgang in der Reibungsbremse anfallende Bremswärme an Bord des Schienenfahrzeugs möglichst effizient genutzt werden kann.

Gelöst wird diese Aufgabe durch ein Schienenfahrzeug mit den Merkmalen des Anspruchs 1. Vorteilhafte Ausgestaltungen der Erfindung sind in den abhängigen Ansprüchen definiert.

Die Erfindung geht von der Überlegung aus, dass die bislang bei einer Reibungsbremse ungenutzt an die Umgebung abgegebene Bremswärme nutzbringend an Bord des Schienenfahrzeugs verwendet werden kann, indem zunächst die Bremswärme mittels eines Wärmeträger-Fluids von den Reibpartnern der Reibungsbremse abgegriffen und einen Wärmetauscher eines Verbrauchers zugeführt werden kann. Für diesen Transport der Bremswärme wird ein Wärmeträger-Fluid verwendet, welches mittels einer Fördereinrichtung, zum Beispiel einer Pumpe, in einem Kreislauf geführt wird. Das Wärmeträger-Fluid ist bevorzugt eine Flüssigkeit, z.B. ein Gemisch aus Wasser und Zusatzstoffen, wie Frost- und Korrosionsschutzmittel.

Mit Vorteil sind in diesem Kreislauf Schaltmittel vorgesehen, mittels derer der Volumenstrom des Wärmeträger-Fluids entweder über einen Wärmetauscher der Klimaanlage des Zugs, oder über einen weiteren Wärmetauscher an einen anderen bordseitigen Verbraucher lenkbar ist. Erfindungsgemäß ist hierfür eine Steuervorrichtung vorgesehen, welche einerseits auf die Pumpe so wirkt, dass das Fördervolumen im Wärmeträger-Fluid-Kreislauf vorgebbar ist. Dadurch ist die Wärmemenge steuerbar. Andererseits sind im Wärmeträger-Fluid-Kreislauf Schaltmittel vorgesehen, mittels derer der Volumenstrom entweder über einen Wärmetauscher der Klimaanlage des Schienenfahrzeugs oder über zumindest einen weiteren Wärmetauscher eines anderen Verbrauchers schaltbar ist. Dadurch ist es möglich, abhängig von Betriebsbedingungen den Wärmetransort an verschiedene Verbraucher zu lenken.

In einer bevorzugten Ausführungsform ist eine Messeinrichtung zur Messung der Temperatur vorgesehen, die dazu eingerichtet ist, eine Vorlauftemperatur stromabwärts des Reibpartner-Wärmetauschers, eine Rücklauftemperatur (TR1) eines weiteren Wärmetauschers, und die Rücklauftemperatur (TR 2) eines klimaanlagenseitigen Wärmetauschers zu messen. Die Messeinrichtung besteht aus mehreren Temperatursensoren die längs des Wärmeträger-Fluid-Kreislaufs angeordnet sind. Jeder dieser Temperatursensoren erzeugt einen analogen Messwert der digitalisiert wird und der Steuereinheit zugeleitet ist. je nach Betriebsbedingung entscheidet die Steuereinheit Ziel und Menge des Wärmetransports.

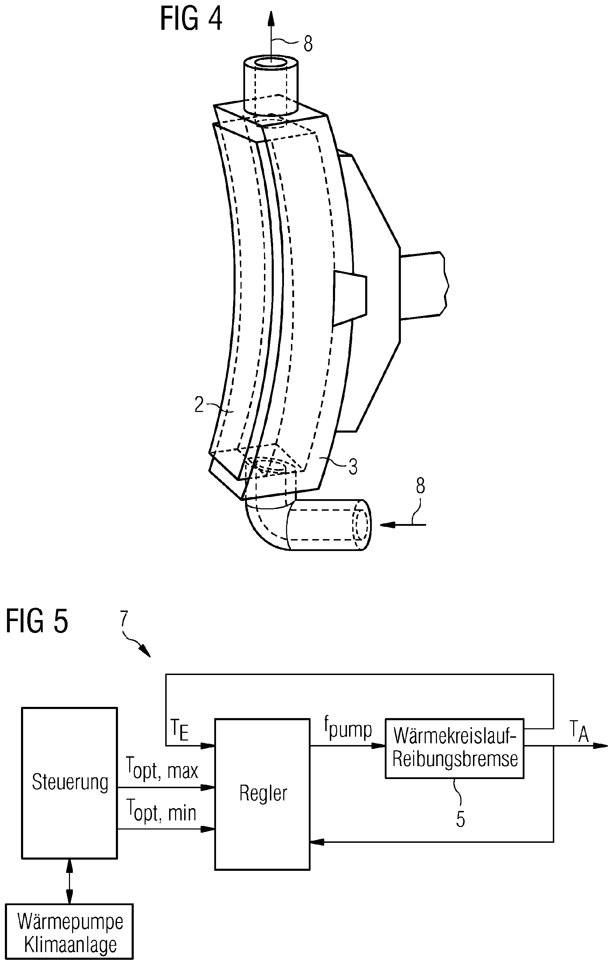

In einer besonderen Ausgestaltung kann vorgesehen sein, dass die Steuereinheit einen Digitalrechner beinhaltet, der über eine Signalleitung mit einem Bremsrechner des Schienenfahrzeugs verbunden ist. Aus der Interaktion zwischen Steuereinheit und Bremsrechner ergibt sich eine Reihe von Vorteilen. Zunächst sei festgehalten, dass ein Bremsrechner auf einem Schienenfahrzeug üblicherweise bereits vorhanden ist und dazu eingerichtet, bei einer vom Fahrzeugführer vorgegebenen Bremskraftvorgabe die erforderliche Bremskraft für die einzelnen Bremssysteme des Zuges zu berechnen und an den jeweiligen Bremszylindern einzustellen. Diese charakteristischen Bremswerte können entweder in Bremsrechner selbst oder in der Leittechnik hinterlegt sein. Durch die Kopplung des Bremsrechners mit der Steuereinheit ist es möglich, aus vorhandenen Informationen (abgelegt entweder in der Leittechnik oder in Bremsrechner selbst) die Reibungswärme auszurechnen, die bei einem Bremsvorgang an jeder Bremseinheit entwickelt wird. Berücksichtigt man dabei, dass ein Teil der Reibungswärme durch die Konstruktionsteile an die Umgebung verloren geht, so stellt der verbleibende Rest die theoretisch nutzbare Reibungswärme dar. In Kenntnis dieser kann ein Regler in der Steuereinheit (Figur 5) gezielt auf Kreiselpumpe und 3-Wegeventile so einwirken, dass die beim Bremsvorgang zu erwartende Wärmemenge effizient wieder verwendet werden kann, entweder in der Klimaanlage des Schienenfahrzeugs selbst, oder in einem anderen bordseitigen Wärmeverbraucher.

Die Fördereinrichtung im Wärmeträger Fluid-Kreislauf kann zweckmäßig als Kreiselpumpe ausgebildet sein, die Schaltmittel lassen sich auf einfache und kostengünstige Weise durch herkömmliche 3-Wegeventile realisieren.

In einer ganz besonders bevorzugten Ausführung kann vorgesehen sein, dass die Steuereinheit dazu eingerichtet ist, auf die Schaltmittel und die Kreiselpumpe so einzuwirken, dass ein für die optimale Arbeit der Wärmepumpe der Klimaanlage oder eines anderen Verbrauchers erforderliche Temperaturbereich eingehalten werden kann. Dadurch ist es möglich, dass die an einen bordseitigen Verbraucher zugeleitete, rückgewonnene Bremsenergie an die jeweiligen Gegebenheiten eines Verbrauchers angepasst werden kann. Im Falle dass die Bremsenergie einer Klimaanlage zugeführt wird, kann der an den Verdichter der Wärmepumpe übermittelte Wärmestrom so gewählt werden, dass ein optimaler Betrieb (beispielsweise in einem Temperaturbereich zwischen 15 und 25 °C) der Klimaanlage möglich ist. Dadurch ergibt sich der Vorteil, dass die Wärmepumpe der Klimaanlage in einem vom Hersteller der Klimaanlage vorgegebenen energetisch günstigen Temperaturbereich betrieben werden kann. Dies hat zur Folge, dass die bei einem Bremsvorgang quasi stoßweise anfallende Bremswärme in einer konventionellen Schienenfahrzeug-Klimaanlage effizient genutzt werden kann.

Im anderen Fall, wenn der thermische Verbraucher nicht eine Klimaanlage ist, sondern die rückgewonnene Energie beispielsweise einem an Bord befindlichen Warmwasserkessel zugeleitet werden soll, kann je nach dem festgestellten Wärmebedarf die entsprechende Menge an Bremswärme übertragen werden. Ist beispielsweise die Wasser-Temperatur in einem Warmwasserkessels tief abgesunken, wird die gesamte bzw. zumindest ein großer Teil der bei einem Bremsvorgang anfallenden Energie an den Warmwasserkessel transferiert. Liegt hingegen die Temperatur des Warmwasserkessel nur geringfügig unter seiner Solltemperatur, wird nur ein Teil der zurückgewonnenen Bremsenergie dem Warmwasserkessel zugeleitet; der verbleibende Teil, beispielsweise einem anderen Verbraucher zugeleitet, oder wenn keine bordseitige Nutzung möglich ist, an die Umgebung abgegeben. Von diesem seltenen Ausnahmefall abgesehen ist, ist Bremswärme in diversen Verbrauchern des Schienenfahrzeugs, wie beispielsweise in der Küche des Restaurant-Waggons, in den Sanitäranlagen eines Reisezugwagens, oder in einem Schlafwagen mit Waschgelegenheit oder anderswo meist in irgendeiner Form nutzbar. Es ist auch denkbar, die Bremswärme an einen Wärmespeicher zu übertragen, wobei beim Laden des Energiespeichers eine bevorstehende Energieentnahme von einem vorausliegenden Streckenabschnitt von der Steuereinheit bzw. der Leiteinrichtung berücksichtigt wird.

### Kurzbeschreibung der Zeichnung

Zur weiteren Erläuterung der Erfindung wird im nachfolgenden Teil der Beschreibung auf Zeichnungen Bezug genommen, aus denen weitere vorteilhafte Ausgestaltungen, Einzelheiten und Weiterbildungen der Erfindung anhand eines nicht einschränkenden Ausführungsbeispiels zu entnehmen sind. Es zeigen:
- Figur 1: ein Blockschaltbild, welches das Arbeitsprinzip veranschaulicht;
- Figur 2: eine besondere Ausführung der Erfindung, bei der die Reibungsbremse als Scheibenbremse ausgeführt ist, wobei Bremsscheibe und Radsatzwelle thermisch entkoppelt sind;
- Figur 3: eine besonders bevorzugte Ausführung der Erfindung, bei der die Reibbremse als thermisch isolierte Scheibenbremse ausgeführt ist;
- Figur 4: eine besondere Ausführung der Erfindung, bei dir die Reibungsbremse als Klotzbremse ausgeführt ist, wobei eine in der Zeichnung dargestellten Klotzbrems-Einheit von einem Wärmeträgerfluid durchströmt ist;
- Figur 5: ein Blockschaltbild eines Regelkreises, in welchem ein Transfer der Bremswärme an eine Klimaanalage dargestellt ist, wobei vom Regler ein seitens der Klimaanlage vorgegebenes energetisch günstiges Temperaturintervall berücksichtigt wird;
- Figur 6: eine Ausführung der Erfindung bei einer Einzelradantriebseinheit einer Niederflur-Straßenbahn.

### Ausführung der Erfindung

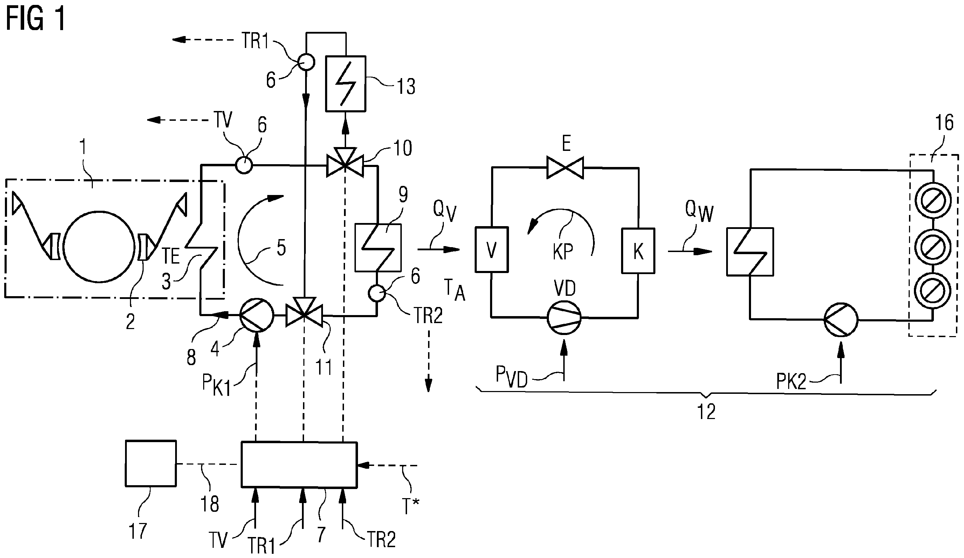

Figur 1 veranschaulicht das Arbeitsprinzip der Erfindung in Form eines Blockschaltbildes. Eine als pneumatische Bremse ausgebildete Reibbremse 1 besteht aus einem nur symbolisch angedeuteten drehenden Teil (Trommel oder Bremsscheibe) auf den ein gestellfester Reibpartner 2 wirkt. Gestellfest heißt, dass der Reibpartner 2 zwar über den Hub der Bremsbewegung beweglich, sonst aber auf dem Gestell der Bremsvorrichtung ortsfest befestigt ist. Am Reibpartner 2 ist ein Wärmetauscher 3 ausgebildet. Üblicherweise sind bei einer Bremseinheit mehrere dieser Reibpartner 2 vorhanden. Die während eines Bremsvorgangs in einem Reibpartner 2 anfallende Bremswärme wird von dem Wärmetauscher 3 abgegriffen. Der Wärmetauscher 3 ist von einem Wärmeträger-Fluid 8 durchströmt. Die Strömung des Wärmeträger-Fluids 8 erzwingt eine Fördereinrichtung 4, die im vorliegenden Beispiel eine Kreiselpumpe ist. Die Kreiselpumpe nimmt vom Netz die elektrische Leistung PK1 auf. Das Wärmeträger-Fluid 8 wird in einem Kreislauf 5 gefördert. In diesen Kreislauf sind Schaltmittel 10, 11 eingebunden, die als 3-Wegeventile ausgebildet sind. Zur Steuerung der Wärmerückgewinnung ist eine Steuereinheit 7 vorgesehen. Wie in Figur 1 durch unterbrochene Linienführung angedeutet, wirkt die Steuereinrichtung 7 sowohl auf die Kreiselpumpe 4 als auch auf die 3-Wegeventile. Die Steuereinrichtung gibt zum einen die Drehzahl der Kreiselpumpe und damit den pro Zeiteinheit geförderten Volumenstrom des Wärmeträger-Fluids 8 im Kreislauf 5 vor. Zum anderen kann durch die Einwirkung auf die 3-Wegeventile 10, 11 der Volumenstrom entweder über einen Wärmetauscher 9 einer Klimaanlage 12, oder über einen weiteren Wärmetauscher 13 gelenkt werden. Wie noch unten stehend näher ausgeführt, sind der Steuereinheit 7 eine Reihe von Betriebsparameter zugeleitet.

In Figur 1 sind oberhalb des Bezugszeichens 12 an sich bekannte Komponenten eine Klimaanlage 12 zusammengefasst, wie sie bei Schienenfahrzeugen üblicher Weise eingesetzt wird. Die Klimaanlage 12 besteht aus zwei Kreisläufen, zunächst aus einer Wärmepumpe mit einem Kreisprozess KP, in welchem ebenfalls ein Wärmeträger-Fluid zirkuliert. Im Gegensatz zum Wärmeträger-Fluid von oben wechselt dieses abwechselnd den Aggregatzustand. Die Zirkulation wird in bekannter Weise von einem Verdichter VD erzwungen, der das Wärmeträger-Fluid in diesem Kreislauf durch einen Kondensator K, durch ein E Expansionsventil und durch einen Verdampfer V führt. Der Verdichter VD nimmt vom Bordnetz die elektrische Leistung PVD auf. An den Verdampfer V transferierte Wärmeleistung QV entstammt im vorliegenden Fall der dem Reibpartner 2 entnommenen Bremswärme. Der Kondensator K der Klimaanlage 12 gibt wiederum Wärmeleistung QW an einen nicht näher gekennzeichneten Wärmetauscher ab. Dieser Wärmetauscher ist ebenfalls in einen Kreislauf eines Wärmetransport-Fluides eingebunden (Pumpe PK1), so dass Bremswärme schlussendlich an Heizkörper 16 eines Fahrgastraumes des Schienenfahrzeugs gelangt. Damit ist das eingangs gestellte Ziel erreicht, die beim Bremsvorgang in einem Reibpartner 2 anfallende Reibungswärme (in Figur 1 links) wird zumindest teilweise an Bord des Schienenfahrzeugs nutzbringend in einem Wärmeverbraucher, zum Beispiel Heizkörper 19 in einem Wagenkasten eines Schienenfahrzeugs (in Figur 1 rechts) transferiert und dort nutzbringend verwendet. Wie bereits erwähnt, ist die Klimaanlage 12 an sich nicht Gegenstand der Erfindung, so dass sich die folgenden Erläuterungen auf den in Figur 1 links der Klimaanlage 12 dargestellten Teil des Blockschaltbildes beschränken.

In Figur 1 ist in Kreislauf 5 die pro Zeiteinheit geführte Menge des Wärmeträger-Fluids 8 durch die Drehzahl der Kreiselpumpe 4 vorgegeben. Die Drehzahl der Kreiselpumpe 4 wird von der Steuereinrichtung 7 vorgegeben, z.B. die Frequenz f eines Frequenzumrichters. In Figur 1 ist mit TE die Temperatur am wärmaufnehmenden Wärmetauscher 3, mit TA die Temperatur am wärmeabgebenden Wärmetauscher 9 bezeichnet. Wie bereits angedeutet, berücksichtigt die Steuereinheit 7 eine Reihe von Prozessparametern, unter anderem die Temperatur des Wärmeträger-Fluids 8, gemessen an verschiedenen Punkten des Kreislaufs 5. Mittels einer Temperatur-Messeinrichtung 6 wird die Vorlauftemperatur TV an verschiedenen Stellen gemessen. Ein erster Messwert ist bei Austritt aus dem Wärmetauscher 3 des Reibpartners 2. Ein anderer Messwert ist die Temperatur am Ausgang des Wärmetauscher 13 (Rücklauftemperatur TR1), sowie die Rücklauftemperatur TR2 am Ausgang des Wärmetauschers 9. Diese Temperatur-Messwerte TV, TR1 und TR2 liegen zunächst analog vor, werden digitalisiert und der Steuereinheit 7 zugeführt. (In Figur 1 ist diese Zuleitung der Temperatur-Messwerte an die Steuereinheit 7 jeweils durch Pfeile angedeutet). Die Steuereinrichtung 7 berücksichtigt einen oder alle der gemessenen Temperaturen bei der Einwirkung auf die Kreiselpumpe 4 bzw. auf die 3-Wegeventile 10, 11.

Durch Vorgabe der Drehzahl der Kreiselpumpe 4 bzw. durch Vorgabe der Schaltstellungen der 3-Wegeventile ist es möglich, die Bremswärme in vorgebbaren Ausmaß entweder an die Klimaanlage 12 oder an einen anderen, dem Wärmetauscher 13 zugeordneten Wärmeverbraucher, zu leiten. Ein solcher Wärmeverbraucher kann beispielsweise die Erzeugung bzw. Bereitstellung des Heißwassers für das Bordrestaurant sein, kann aber auch ein oder mehrere Heizkörper in einem Fahrgastraum bzw. in einem Führerstand oder ein anderer Verbraucher in einem Waggon des Zuges sein. In all diesen Fällen wird ebenfalls ein Beitrag zur Rekuperation der Reibungswärme geleistet.

Um die Rückgewinnung der Bremsenergie möglichst gut an die Bedürfnisse eines am Bord des Schienenfahrzeugs befindlichen Wärmeverbrauchers anpassen zu können, kann es günstig sein, wenn neben den oben genannten Temperatur-Messwerten auch der im jeweiligen Verbraucher anfallende Wärmebedarf messtechnisch erfasst wird. Beispielsweise ist es bei der Abgabe von Wärme an eine Wärmepumpe einer Klimaanlage günstig, wenn die vom Hersteller der Klimaanlage angegebene optimale Temperatur T* für die Wärmepumpe eingehalten wird. Mit anderen Worten, liegt die zugeführte Temperatur innerhalb eines vom Hersteller der Anlage vorgegebenen Toleranzfeldes, ist die Energiewandlung im Kreisprozess der Wärmepumpe effizienter. Um dies zu erreichen, ermittelt die Steuereinheit 7 aus den gemessenen Temperaturen (TV, TR1, TR2) einen charakteristischen Temperaturwert und vergleicht diesen mit dem vom Hersteller der Wärmepumpe vorgegebenen Temperatur-Toleranzfeld. Ist beispielsweise diese Differenz negativ, also wenn der charakteristische Temperaturwert des Wärmeträger-Fluids 8 kleiner ist als diese vom Hersteller der Wärmepumpe/Klimaanalage als optimal bezeichnete Temperatur, wird die Drehzahl der Kreiselpumpe 4 von der Steuereinheit 7 entsprechend so eingestellt, dass der optimale Temperaturbereich eingangsseitig an der Klimaanlage 12 wieder erreicht ist. Liegt hingegen die charakteristische Temperatur des Wärmeträger-Fluids 8 außerhalb des vom Hersteller angegebenen optimalen Temperaturbereichs, werden die 3-Wegeventile so geschaltet, dass Bremswärme nicht an die Klimaanlage 12 transportiert wird, sondern an einen anderen Verbraucher an Bord, zum Beispiel direkt in einen oder mehrere Heizkörper des Führerstands bzw. Fahrgastraums, oder zu einem Wärmetauscher 13, der beispielsweise zur Nutzwasser-Aufbereitung an Bord des Schienenfahrzeugs dient.

Durch die Erfindung ist es möglich, die stoßartig bei einer Reibungsbremse anfallende Bremsenergie, die bislang ungenutzt und oftmals unerwünscht an die Umgebung abgegeben wurde, direkt an Bord des Fahrzeugs in nutzbare Wärme (z.B. Heizung Fahrgastraum) umzuwandeln.

Dank der Erfindung ist es möglich, zumindest einen Teil der bei einem Bremsvorgang einer Reibungsbremse anfallenden Abwärme auf nutzbringende Weise an Bord eines Schienenfahrzeugs zu verwenden.

Die nutzbringende Verwendung der Reibungswärme ist nicht unbedingt an die Heizperiode gebunden. Wie bereits erwähnt, ist die nutzbringende Verwendung der Bremswärme auch außerhalb der Heizperiode möglich, indem beispielsweise diese für die Warmwasseraufbereitung, in der Küche des Speisewagens, in Sanitäranlagen eines Reisezugwagens oder Schlafwagens mit Waschgelegenheit (Bad, Dusche) etc. verendet wird. Zu diesem Zweck wird außerhalb der Heizperiode das Wärmeträger-Fluid 8 an den Wärmetauscher 13 geschalteten. (Eine solche Schalthandlung erfolgt auch innerhalb der Heizperiode, wenn die Rücklauftemperatur TR 2 nach dem Wärmetauscher 9 oberhalb des für die Klimaanlage 12 günstigen Bereiches liegt, zum Beispiel wenn TR 2 >30 °C ist).

Wie bereits oben erwähnt kann durch Vorgabe der Drehzahl der Kreiselpumpe 4 anfallende Bremswärme quantifiziert an den jeweiligen Verbraucher transferiert werden, indem beispielsweise der aktuelle Bedarf der Energiesenke (zum Beispiel momentane Temperatur in einem Warmwasserkessel) vorzeitig ermittelt und bei der Wärmeübertragung berücksichtigt wird.

In einem weiteren Aspekt der Erfindung ist die Steuereinrichtung 7 mit einem Bremskraftrechner 17 über eine signalleitende Verbindung 18 gekoppelt. Ein solcher Bremskraftrechner 17 ist in der Regel bei Zügen stets vorhanden. Er hat die Aufgabe, eine vom Fahrzeugführer vorgegebene Bremskraftvorgabe unter Berücksichtigung des aktuellen Fahrzeuggewichts und der aktuellen Fahrzeuggeschwindigkeit die erforderliche Bremskraft für die pneumatische Druckluftbremse zu berechnen und diese am jeweiligen Bremszylinder einzustellen. Unter Berücksichtigung dieser Informationen ist es möglich, vorausschauend die bei einem Bremsvorgang an einer Bremseinheit entwickelte Reibungswärme zu berechnen. Berücksichtigt man dabei den Wärmeanteil, der durch Konvektion durch Kondiktion und Strahlung verloren geht, so lässt sich die bei einem Bremsvorgang anfallende praktisch nutzbare Bremswärme gut abschätzen. In Kenntnis der errechneten nutzbaren Bremswärme kann die Drehzahl der Kreiselpumpe bzw. die Menge des Wärmeträger Fluids pro Sekunde so vorgegeben werden, dass die Temperatur des durch den Wärmetauscher 9 der Klimaanlage 12 geförderte Wärmeträger-Fluids an den für den optimalen Betrieb der Wärmepumpe der Klimaanlage erforderlichen Temperaturbereich T* (zum Beispiel 15-25 °C) sehr gut angepasst werden. Mit anderen Worten indem die an den Verdampfer V der Wärmepumpe der Klimaanlage abgegebene Wärmeleistung Qv innerhalb bestimmter Grenzen gehalten wird, ist es möglich, die Klimaanlage 12 in einem günstigen Arbeitsbereich zu betreiben. Entsprechendes gilt für den Fall, dass Reibungswärme bedarfsgerecht an einen anderen Verbraucher (über Wärmetauscher 13) transferiert wird.

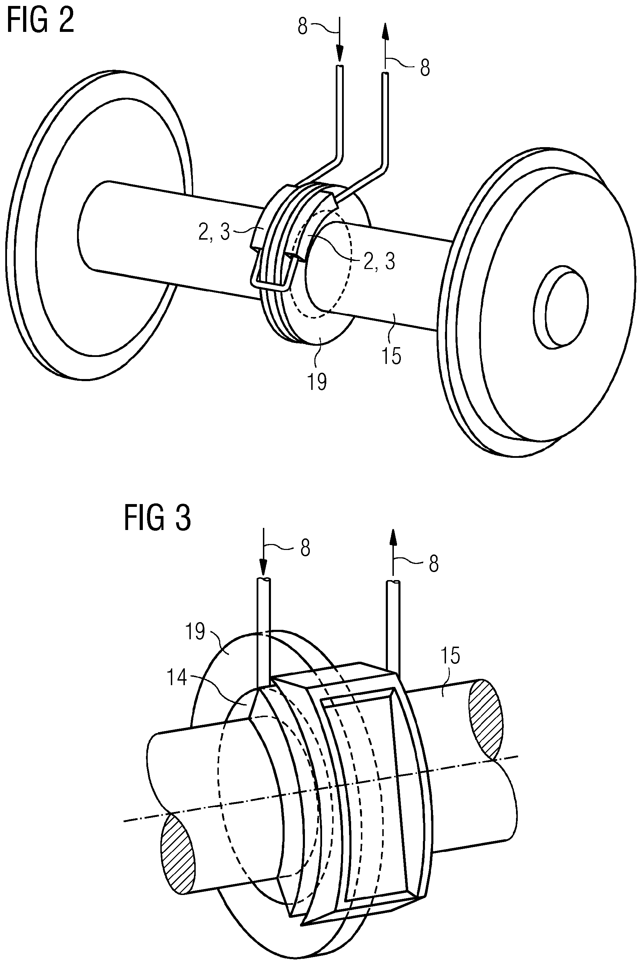

Figur 2 zeigt die Anwendung der Erfindung bei einer Scheibenbremse. Die Scheibenbremse weist ortsfeste Bremsbacken 2 auf. Jede dieser Bremsbacken ist als Wärmetauscher ausgebildet. Jeder Wärmetauscher 3 ist von einem Wärmeträger-Fluid 8 durchströmt. Das Wärmeträger-Fluid 8 ist in isolierten Leitungen zu- bzw. abgeleitet (Vorlauf, Rücklauf). Dank der isolierten Leitungen gelangt ein großer Teil der Bremswärme in den Kreisprozess 5. In Figur 1 ist mit TE die Temperatur am wärmaufnehmenden Wärmetauscher 3, mit TA die Temperatur am wärmeabgebenden Wärmetauscher 9 bezeichnet. Bremsscheibe 19 ist an der Radsatzwelle 15 montiert.

Um möglichst viel Bremswärme zu nutzen, kann es darüber hinaus günstig sein, den rotierenden Reibpartner wärmetechnisch zu isolieren. Dies kann beispielsweise dadurch erfolgen, indem die Bremsscheibe mittels eines Isolationsteils 14 mit der Radsatzwelle 15 verbunden wird. Dadurch ist der Wärmestrom von der Bremsscheibe 19 zur Radsatzwelle 15 gehemmt. Dies ist in Figur 3 skizziert. Der Isolationsteil 14 trennt wärmetechnisch Bremsscheibe 19 und Radsatzwelle 15. Jede Bremsbacke der Scheibenbremse ist wieder als Wärmetauscher 3 ausgebildet. Der Wärmetauscher 3 ist über isolierte Leitungen in einen Kreislauf eines Wärmeträger-Fluids 8 eingebunden. Durch die thermische Entkopplung zwischen Bremsscheibe 19 und Radsatzwelle 15 wird erreicht, dass ein großer Teil der bei einer Bremsung entstehende Energieanteil zur Rekuperation genutzt werden kann.

Figur 4 zeigt die Anwendung der Erfindung bei einer Klotzbremse. Die Bremsbacke der Klotzbremse bildet wieder einen Wärmetauscher 3 der von einem Wärmeträger-Fluid 8 durchströmt ist und durch isolierte Leitungen zu- und abgeleitet wird.

Figur 5 zeigt ein Blockschaltbild eines Regelkreises, mit dem ein Transfer der Bremswärme an eine Klimaanalage so erfolgt, dass ein seitens der Klimaanlage vorgegebenes energetisch günstiges Temperaturintervall berücksichtigt wird. Die Steuereinheit 7 erhält dabei das vom Typ der Klimaanlage her gesehene günstige Temperaturintervall (TOPmax und TOPmin) von der Wärmepumpe der Klimaanlage. Die Abgabetemperatur TA an die Klimaanlage wird an den Regler zurückgeführt. Unter Berücksichtigung der Eingangstemperatur TE (Wärmeabnahme am Reibpartner) regelt der Regler die Frequenz bzw. Drehzahl der Kreiselpumpe im Kreislauf 5. Im Ergebnis wird die an die Klimaanlage abgegebene Bremswärme so abgegeben, dass ein optimaler Betrieb der Wärmepumpe der Klimaanlage möglich ist.

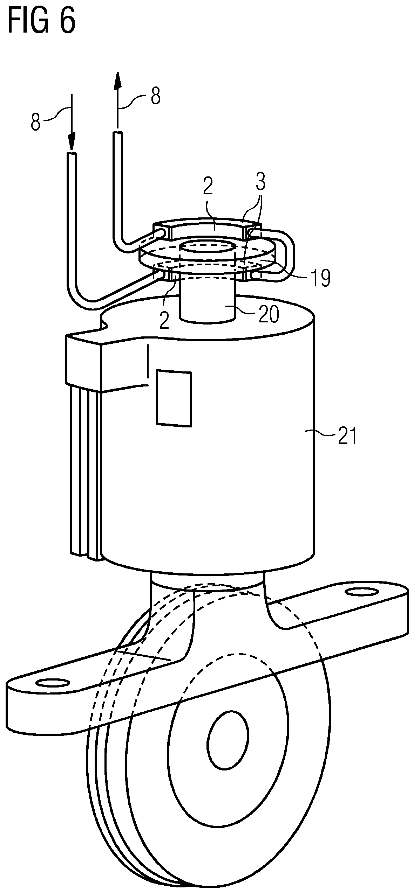

Figur 6 zeigt eine Ausführung der Erfindung bei einem Antrieb für ein Einzelrad einer Niederflur-Straßenbahn. Eine senkrecht stehende Einzelradantriebseinheit 21 ist an ihrem oberen von der Schiene abgewandten Ende mit einer Scheibenbremse versehen. Diese weist endseitig an der Antriebswelle 20 eine rotierende Bremsscheibe 19 auf. Die Scheibenbremse weist zwei gestellfeste Reibpartner 2 (Bremsbacken) auf. Jede dieser Bremsbacken 2 fungiert als Wärmetauscher 3 für ein Wärmeträger-Fluid 8. Das WärmeträgerFluid 8 wird wieder zum Zweck der Energierückgewinnung in dem oben erläuterten Kreislauf 5 geführt.

Zusammengefasst ergibt sich durch die Erfindung eine Reihe von Vorteilen:
Zunächst sei erwähnt, dass Dank der Erfindung der bordseitige Energieverbrauch reduziert werden kann. Von der Bord-Energieversorgung eines Zugs muss weniger Energie entnommen werden muss, wodurch diese Baugruppen für eine geringere Nennleistung konzipiert werden können, was Investitionskosten spart.

Die hochwertige elektrische Energie wird nicht für Heizung, sondern zum Antrieb von Verdichter der Wärmepumpe und Betrieb der Kreiselpumpe verwendet und somit hoch effizient genutzt.

Ein weiterer wesentlicher Vorteil ergibt sich daraus, dass der Klimaanlage Bremswärme in einem für die Klimaanlage günstigen Temperaturintervall übergeben wird, was für die Leistungszahl günstig ist.

Für eine U-Bahn-Infrastruktur ist von Vorteil, dass die vom einem U-Bahn-Zug im Tunnel erzeugte Abwärme insgesamt geringe ist.

Da Bremswärme zumindest teilweise von einem Reibpartner (Bremsklotz) abgeleitet wird, verringert sich dessen Bremstemperatur und in einem gewissen Ausmaß damit auch der Verschleiß.

Bei der Realisierung der Erfindung wirkt sich besonders vorteilhaft die Tatsache aus, dass bei vielen Schienenfahrzeugen, z.B. bei Metros oder Reisezugwagen, die Klimaanlage unmittelbar in der Nähe der Fahrwerke unter dem Wagenkasten installiert ist. Dadurch kann die Leitungslänge für das Wärmeträger-Fluid vergleichsweise kurz gehalten werden

Schließlich wir durch die Energieeinsparung eine Reduktion des CO2 Ausstoßes erreicht und ein Beitrag zum Umweltschutz geleistet.

Obwohl die Erfindung im Detail durch bevorzugte Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

So kann der zumindest eine Wärmetauscher 13 mit verschiedenen Verbrauchern eines Schienenfahrzeugs gekoppelt sein, beispielsweise Heizkörper, Heizkessel zur Warmwasseraufbereitung. Jeder diese Wärmesenken kann mit einem Temperatursensor versehen sein, dessen Signal der Steuereinheit 7 zugeleitet ist.

Als Wärmeträger-Fluid steht eine Reihe für die Bahntechnik geeigneter und kommerziell verfügbarer Werkstoffe zur Verfügung.

Selbstverständlich ist die Erfindung nicht auf die oben dargestellten Typen von pneumatisch betätigten Reibungsbremsen beschränkt, sondern überall dort anwendbar, wo von einem Reibpartner Wärme durch einen Wärmetauscher entnehmbar ist.

### Zusammenstellung der verwendeten Bezugszeichen

- 1: Reibbremse
- 2: Reibpartner
- 3: Wärmetauscher
- 4: Fördervorrichtung, Kreiselpumpe
- 5: Wärmeträger-Fluid-Kreislauf
- 6: Temperaturmesseinrichtung
- 7: Steuereinheit
- 8: Volumenstrom des Wärmeträger-Fluid
- 9: Wärmetauscher - Klimaanlage
- 10: Dreiwegeventil
- 11: Dreiwegeventil
- 12: Klimaanlage
- 13: Wärmetauscher - Verbraucher
- 14: Isolationsteil, Thermische Entkopplung
- 15: Radsatzwelle
- 16: Heizkörper
- 17: Bremsrechner
- 18: Signalverbindung zwischen 17 und 7
- 19: Bremsscheibe
- 20: Antriebswelle eines Einzelradantriebs
- 21: Einzelradantriebseinheit

- TA: Temperatur am Wärmetauscher der Klimaanlage (Ausgang)
- TE: Temperatur am Wärmetauscher eines Reibpartners (Eingang)
- TV: Vorlauftemperatur
- TR1: Rücklauftemperatur Wärmetauscher Verbraucher
- TR2: Rücklauftemperatur Wärmetauscher Klimaanlage
- T*: Temperatur, günstig für einen Verbraucher

- Qv: im Verdampfer aufgenommene Wärmeleistung
- QW: an Wärme Verbraucher abgegebene Wärmeleistung

- V: Verdampfer
- K: Kondensator
- VD: Verdichteter
- E: Expansionsventil
- KP: Durchlaufsinn des Kreisprozesses

- PVD: elektrische Antriebsleistung Verdichteter
- PK1: elektrische Antriebsleistung Kreiselpumpe 4
- PK2: elektrische Antriebsleistung Kreiselpumpe

## Patentansprüche

1. Schienenfahrzeug mit einer Reibbremse (1), wobei die Reibbremse (1)zumindest einen gestellfesten Reibpartner (2) aufweist, der mit einem Wärmetauscher (3) ausgestattet ist, so dass die bei einem Bremsvorgang im Reibpartner (2) anfallende Bremswärme mittels eines Wärmeträger-Fluids (8), das von eine Fördervorrichtung (4) in einem Wärmeträger-Fluid-Kreislauf (5) geführt wird, an zumindest einen im Wärmeträger-Fluid-Kreislauf (5) angeordneten weiteren Wärmetauscher (9, 13) übertragbar ist, **dadurch gekennzeichnet, dass**
a. eine Messeinrichtung (6) zur Temperaturmessung (TV, TR1, TR2) des Wärmeträger-Fluids (8) vorgesehen ist, und
b. eine Steuereinrichtung (7) vorgesehen ist, der die gemessene Temperatur (TV, TR1, TR2) zugeführt ist, wobei die Steuereinrichtung (7) dazu eingerichtet ist,
i. einerseits auf im Wärmeträger-Fluid-Kreislauf (5) angeordnete Schaltmittel (10, 11) so einzuwirken, dass das Wärmeträger-Fluid (8) entweder über einen Wärmetauscher (9) einer Klimaanlage (12) oder über einen weiteren verbraucherseitigen Wärmetauscher (13) schaltbar ist, und
ii. andererseits auf die Fördervorrichtung (4) so einzuwirken, dass der Volumenstrom des Wärmeträger-Fluids (8) vorgebbar ist.

2. Schienenfahrzeug nach Anspruch 1, **dadurch gekennzeichnet dass** die Messeinrichtung (6) dazu eingerichtet ist eine Vorlauftemperatur (TV) stromabwärts des Wärmetauscher (3), und/oder eine Rücklauftemperatur (TR1) stromabwärts des Wärmetauschers (13) und eine Rücklauftemperatur (TR 2) eines Wärmetauscher (9) der Klimaanlage (12) zu messen.

3. Schienenfahrzeug nach Anspruch 2, **dadurch gekennzeichnet dass** die Steuereinheit (7) einen digitalen Regler enthält und über eine Signalleitung (18) mit einem Bremsrechner (17) des Schienenfahrzeugs signaltechnisch verbunden ist.

4. Schienenfahrzeug nach Anspruch 3, **dadurch gekennzeichnet, dass** der Bremsrechner (17) dazu eingerichtet ist, die bei einem bevorstehenden Bremsvorgang zu erwartende Bremswärme vorausschauend zu berechnen und einen nutzbaren Anteil davon in Form eines Signals über die Signalleitung (18) an die Steuereinheit (7) zu übermitteln.

5. Schienenfahrzeug nach Anspruch 4, **dadurch gekennzeichnet, dass** die Fördereinrichtung (4) als Kreiselpumpe ausgebildet ist.

6. Schienenfahrzeug nach Anspruch 4, **dadurch gekennzeichnet, dass** die Schaltmittel (10, 11) als 3-Wegeventile ausgebildet sind.

7. Schienenfahrzeug nach Anspruch 5, **dadurch gekennzeichnet, dass** die Steuereinheit (7) dazu eingerichtet ist, auf die Schaltmittel (10, 11) und die Fördereinrichtung (4) so einzuwirken, dass ein für den optimalen Betrieb der Wärmepumpe der Klimaanlage (12) oder eines anderen Verbrauchers erforderliche Temperaturbereich eingehalten ist.

8. Schienenfahrzeug nach einem der Ansprüche 1-7, **dadurch gekennzeichnet, dass** die Reibbremse einen rotierenden Reibpartner aufweist, der mittels eines Isolationsteils (17) mit einer Radsatzwelle (15) verbunden ist.

9. Schienenfahrzeug nach einem der Ansprüche 1-7, **dadurch gekennzeichnet, dass** die Reibbremse einen rotierenden Reibpartner umfasst, der endseitig an einer vertikal ausgerichteten Antriebswelle (20) einer Einzelradantriebseinheit (21) angeordnet ist.

10. Schienenfahrzeug nach Anspruch 8 oder 9, **dadurch gekennzeichnet dass** der rotierende Reibpartner durch eine Bremsscheibe (19) einer Scheibenbremse gebildet ist.

## Claims

1. Rail vehicle with a friction brake (1), wherein the friction brake (1) has at least one friction partner (2) fixed to the frame, which is equipped with a heat exchanger (3), so that the braking heat arising in the friction partner (2) during a braking procedure can be transferred by means of a heat exchanger fluid (8), which is guided in a heat exchanger fluid circuit (5) by a conveying apparatus (4), to at least one further heat exchanger (9, 13) arranged in the heat exchanger fluid circuit (5),
**characterised in that**
a. a measuring facility (6) is provided for temperature measurement (TV, TR1, TR2) of the heat exchanger fluid (8), and
b. a control facility (7) is provided, to which the measured temperature (TV, TR1, TR2) is fed, wherein the control facility (7) is configured,
i. on the one hand, to act on switching means (10, 11) arranged in the heat exchanger fluid circuit (5) such that the heat exchanger fluid (8) can be switched either via a heat exchanger (9) of an air-conditioning unit (12) or via a further consumerside heat exchanger (13), and
ii. on the other hand, to act on the conveying apparatus (4) such that the volumetric flow of the heat exchanger fluid (8) can be predefined.

2. Rail vehicle according to claim 1, **characterised in that** the measuring facility (6) is configured to measure an inflow temperature (TV) downstream of the heat exchanger (3), and/or a return temperature (TR1) downstream of the heat exchanger (13) and a return temperature (TR2) of a heat exchanger (9) of the air-conditioning unit (12).

3. Rail vehicle according to claim 2, **characterised in that** the control unit (7) contains a digital regulator and is connected for signal purposes to a braking computer (17) of the rail vehicle via a signal line (18).

4. Rail vehicle according to claim 3, **characterised in that** the braking computer (17) is configured to calculate the braking heat to be anticipated during an impending braking procedure in a predictive manner and to transmit a useable portion thereof, in the form of a signal, to the control unit (7) via the control line (18).

5. Rail vehicle according to claim 4, **characterised in that** the conveying facility (4) is embodied as a centrifugal pump.

6. Rail vehicle according to claim 4, **characterised in that** the switching means (10, 11) are embodied as three-way valves.

7. Rail vehicle according to claim 5, **characterised in that** the control unit (7) is configured to act on the switching means (10, 11) and the conveying facility (4) such that a temperature range required for the optimum operation of the heat pump of the air-conditioning unit (12) or of another consumer is maintained.

8. Rail vehicle according to one of claims 1-7, **characterised in that** the friction brake has a rotating friction partner, which is connected to a wheelset shaft (15) by means of an insulating part (17).

9. Rail vehicle according to one of claims 1-7, **characterised in that** the friction brake comprises a rotating friction partner, which is arranged on the end face of a vertically orientated drive shaft (20) of a single-wheel drive unit (21) .

10. Rail vehicle according to claim 8 or 9, **characterised in that** the rotating friction partner is formed by a brake disc (19) of a disc brake.

## Revendications

1. Véhicule ferroviaire équipé d'un frein à friction (1), le frein à friction (1) comportant au moins un partenaire de friction (2) solidaire du châssis qui est équipé d'un échangeur thermique (3), de sorte que la chaleur générée par le freinage dans le partenaire de freinage (2) lors d'un freinage peut être transférée, au moyen d'un fluide caloporteur (8) qu'un dispositif de transport (4) fait circuler dans un circuit de fluide caloporteur (5), à au moins un autre échangeur thermique (9, 13) agencé dans le circuit de fluide caloporteur (5), **caractérisé en ce que** :
a. est prévu un dispositif de mesure (6) pour la mesure de la température (TV, TR1, TR2) du fluide caloporteur (8) et
b. est prévu un dispositif de commande (7) auquel est amenée la température mesurée (TV, TR1, TR2), le dispositif de commande (7) étant configuré pour
i. d'une part, exercer sur des moyens de commutation (10, 11) agencés dans le circuit de fluide caloporteur (5) une influence telle que le fluide caloporteur (8) peut être commuté soit via un échangeur thermique (9) d'un climatiseur (12) soit via un autre échangeur thermique (13) côté consommateur et
ii. d'autre part, exercer sur le dispositif de transport (4) une influence telle que le débit volumique du fluide caloporteur (8) peut être prédéfini.

2. Véhicule ferroviaire selon la revendication 1, **caractérisé en ce que** le dispositif de mesure (6) est configuré pour mesurer une température aller (TV) en aval de l'échangeur thermique (3) et/ou une température retour (TR1) en aval de l'échangeur thermique (13) et une température retour (TR2) d'un échangeur thermique (9) du climatiseur (12).

3. Véhicule ferroviaire selon la revendication 2, **caractérisé en ce que** l'unité de commande (7) contient un régulateur numérique et est reliée, en termes de technique de signalisation, via une ligne de signaux (18) à un calculateur de freinage (17) du véhicule ferroviaire.

4. Véhicule ferroviaire selon la revendication 3, **caractérisé en ce que** le calculateur de freinage (17) est configuré pour calculer de manière prévisionnelle la chaleur de freinage attendue d'un freinage imminent et pour en transmettre une partie utilisable sous la forme d'un signal via la ligne de signaux (18) à l'unité de commande (7).

5. Véhicule ferroviaire selon la revendication 4, **caractérisé en ce que** le dispositif de transport (4) est réalisé en tant que pompe centrifuge.

6. Véhicule ferroviaire selon la revendication 4, **caractérisé en ce que** les moyens de commutation (10, 11) sont réalisés en tant que vannes à trois voies.

7. Véhicule ferroviaire selon la revendication 5, **caractérisé en ce que** l'unité de commande (7) est configurée pour exercer sur les moyens de commutation (10, 11) et le dispositif de transport (4) une influence telle qu'une plage de température nécessaire pour le fonctionnement optimal de la pompe à chaleur du climatiseur (12) ou d'un autre consommateur est respectée.

8. Véhicule ferroviaire selon l'une des revendications 1-7, **caractérisé en ce que** le frein à friction comporte un partenaire de freinage rotatif qui est relié à un arbre d'essieu (15) au moyen d'une pièce isolante (17).

9. Véhicule ferroviaire selon l'une des revendications 1-7, **caractérisé en ce que** le frein à friction comporte un partenaire de freinage rotatif qui, en son extrémité, est agencé sur un arbre d'entraînement (20) d'une unité d'entraînement de roue individuelle (21) orienté verticalement.

10. Véhicule ferroviaire selon la revendication 8 ou 9, **caractérisé en ce que** le partenaire de freinage rotatif est formé par un disque de frein (19) d'un frein à disque.
